# DEMANDE DE BREVET EUROPEEN

(11) **EP 3 034 150 A1**
(43) Date de publication de la demande: **22.06.2016**
(21) Numéro de dépôt: 15201005.4
(22) Date de dépôt: 18.12.2015
(51) Int. Cl.: B01D 45/08, B01D 45/16, F24F 13/08

(54) **DISPOSITIF SÉPARATEUR D'EMBRUNS À ENSEMBLES DE PROFILÉS DISPOSÉS EN QUINCONCE**

(30) Priorité: 18.12.2014 FR 1462710
(71) Demandeur: STX FRANCE S.A., 44600 Saint Nazaire (FR); CENTRE NATIONAL DE LA RECHERCHE SCIENTIFIQUE -CNRS-, 75016 Paris (FR); UNIVERSITE DE NANTES, 44000 Nantes (FR)
(72) Inventeur: CASARI, Pascal, 44600 SAINT-NAZAIRE (FR); DURAND, Pascal, 44117 SAINT ANDRE DES EAUX (FR); GOURET, Patrice, 44800 SAINT HERBLAIN (FR); KLEIN, Stéphane, 44500 LA BAULE (FR)
(74) Mandataire: Regimbeau

(57) **Abrégé**

Dispositif séparateur d'embruns (1), qui comporte un cadre (2) et un premier et un second ensembles (E_{1 ;} E₂) de profilés longitudinaux et verticaux non jointifs (3 ; 5) de section droite concave, les extrémités haute et basse de ces profilés (3 ; 5) étant reliées audit cadre (2), ces profilés (3 ; 5) délimitant une face externe (FE) et une face interne (FI), la concavité des profilés (3) du premier ensemble (E₁) étant dirigée vers ladite face interne (FI) tandis que celle des profilés (3 ; 5) du second ensemble (E₂) dirigée vers ladite face externe (FE), les profilés (3 ; 5) des deux ensembles (E₁; E₂) étant disposés en quinconce, de sorte que les deux bords longitudinaux de chaque profilé (5) dudit deuxième ensemble (E₂) se situent respectivement en regard de deux profilés voisins (3) dudit premier ensemble (E₁).

Ce dispositif se caractérise en ce qu'il comporte des moyens de réglage (6 ; 7) de l'écartement entre lesdits deux ensembles (E₁ ; E₂).

## Description

La présente invention se rapporte à un dispositif séparateur d'embruns.

Parmi les navires en service actuellement, une très grande partie d'entre eux est équipée d'un système de chauffage/ventilation/climatisation, plus généralement connu sous l'acronyme "HVAC".

Un tel système comporte au moins une prise d'air extérieur, aspiré sous la forme d'un flux généré par un ou plusieurs ventilateurs.

Cette prise d'air communique avec l'air extérieur au travers d'un dispositif qui peut être qualifié de "grille".

Chacun sait qu'en de nombreuses circonstances, l'air est chargé d'embruns, c'est-à-dire d'aérosols marins enlevés par le vent à la crête des vagues. Ces embruns contiennent une forte concentration en sels minéraux, et plus particulièrement en chlorure de sodium.

Ils sont responsables de la corrosion des objets métalliques en mer ou sur le littoral, et parfois aussi de la dégradation et du vieillissement prématurés d'objets non métalliques.

Dans ces conditions, la présence de la grille précitée ne suffit pas pour retenir les embruns hors du conduit qui sépare la prise d'air du système HVAC. Des gouttelettes d'eau salée sont déplacées par le flux d'air jusqu'au système et sont susceptibles d'en dégrader les composants.

C'est pourquoi on a déjà proposé un dispositif séparateur d'embruns qui permet de retenir les gouttelettes d'eau salée tout en laissant passer l'air "sec".

Ce dispositif comprend un cadre parallélépipédique équipé d'une série de profilés identiques et distants les uns des autres. Des profilés font se rejoindre les bords supérieur et inférieur du cadre. Vus de dessus, ces profilés ont la forme d'un "zigzag".

Ainsi, quand de l'air extérieur est aspiré par le ventilateur d'un système HVAC, les gouttelettes d'eau salée ont toutes les chances d'être entraînées, à un moment de leur parcours, contre l'un ou l'autre de ces profilés. Dans ce cas, elles sont acheminées par gravité à la base du dispositif et évacuées vers l'extérieur.

Ce dispositif donne généralement satisfaction. Toutefois, du fait de sa conception et notamment de la forme particulière de ses profilés, il est particulièrement :
- inefficace en dehors d'une plage limitée de vitesse de l'air, typiquement entre 4.5m/s et 8 m/s, cette vitesse variant proportionnellement aux variations de débit d'air constatées sur un navire en fonction de ses besoins (climatisation, chauffage, etc) ;
- bruyant, y compris lors de son utilisation dans la plage de fonctionnement précitée, dite « optimale » ;
- sujet à la corrosion ;
- lourd, ce qui présente un inconvénient pour sa manipulation lors de la construction du navire mais également lors des opérations de maintenance.

On connait de la société HALTON et du document FI-A-874 336 un dispositif séparateur d'embruns à profilés verticaux répartis en deux ensembles distincts. Chaque ensemble est constitué de profilés de forme concave, de concavité dirigée vers celle de l'autre ensemble. Ces profilés sont disposés en quinconce.

La disposition en quinconce des profilés des deux ensembles constitue une série de chicanes qui est particulièrement efficace pour séparer les gouttelettes d'eau de l'air qui passe à travers le dispositif.

Un tel dispositif est encore perfectible. En effet, comme dans le dispositif antérieur décrit plus haut, il ne s'avère pas efficace quelle que soit la vitesse de déplacement de l'air.

L'état de la technique en la matière peut également être illustré par les documents WO 91 /17813 et US 2008/110339.

La présente invention a pour but de pallier ces inconvénients et, par conséquent, de proposer un dispositif de séparation d'embruns de conception simple tout en étant efficace lorsque la vitesse de déplacement des gouttelettes d'eau varie en fonction du flux d'aspiration.

Ainsi, la présente invention se rapporte à un dispositif séparateur d'embruns, qui comporte un cadre et un premier et un second ensembles de profilés longitudinaux et verticaux non jointifs de section droite concave, les extrémités haute et basse de ces profilés étant reliées audit cadre, ces profilés délimitant une face externe et une face interne, la concavité des profilés du premier ensemble étant dirigée vers ladite face interne tandis que celle des profilés du second ensemble est dirigée vers ladite face externe, les profilés des deux ensembles étant disposés en quinconce, de sorte que les deux bords longitudinaux de chaque profilé dudit deuxième ensemble se situent respectivement en regard de deux profilés voisins dudit premier ensemble.

Ce dispositif séparateur d'embruns est remarquable par le fait qu'il comporte des moyens de réglage de l'écartement entre lesdits deux ensembles.

Selon d'autres caractéristiques non limitatives et avantageuses de l'invention :
- au moins les profilés d'un desdits ensembles présentent une section droite en forme d'arc-de-cercle ;
- au moins les profilés d'un desdits ensembles présentent une section droite en forme de "U" à fond et ailes symétriques et divergentes, ou en forme de "V" ;
- les profilés d'un desdits ensembles, en l'occurrence ledit ensemble situé du côté de la face externe, présente au moins un canal de collecte de gouttelettes d'eau, appelé piège à eau ;
- lesdits pièges à eau sont délimités par le recourbement des extrémités opposées desdites ailes ;
- lesdits pièges à eau sont délimités par le recourbement de leurs ailes vers l'extérieur ;
- les profilés du premier ensemble comportent également des pièges à eau dans la zone de jonction de leur base à leurs ailes ;
- le second ensemble est pourvu de pièges à eau, formés par leur recourbement de ses bords longitudinaux des profilés ;
- la section desdits pièges à eau augmente du haut en direction du bas desdits profilés ;
- lesdits moyens de réglage sont de type manuel ;
- lesdits moyens de réglage sont automatisés et indexés sur la vitesse de l'air qui traverse le dispositif ;
- lesdits moyens de réglage sont automatisés et sont asservis à la pression de l'air qui règne dans le dispositif ;
- ledit premier ensemble est rigide tandis que le second ensemble est souple et déformable.

D'autres caractéristiques et avantages de l'invention apparaîtront à la lecture de la description suivante d'un mode de réalisation préféré de l'invention. Cette description est faite en référence aux dessins annexés dans lesquels :
- la figure 1 est une vue simplifiée et en perspective d'un dispositif conforme à l'invention, en place sur une cloison ;
- la figure 2 est une vue de face d'une partie d'un dispositif de la figure 1 ;
- la figure 3 est une vue en perspective partielle d'un dispositif selon la présente invention, destinée à illustrer la configuration des deux ensembles de profilés et leur disposition relative ;
- la figure 4 est une vue simplifiée et en coupe transversale du dispositif de la figure 3 ;
- les figures 5, 6 et 7 sont des schémas montrant simplement la disposition relative des ensembles de profilés en fonction du réglage de moyens d'écartement.

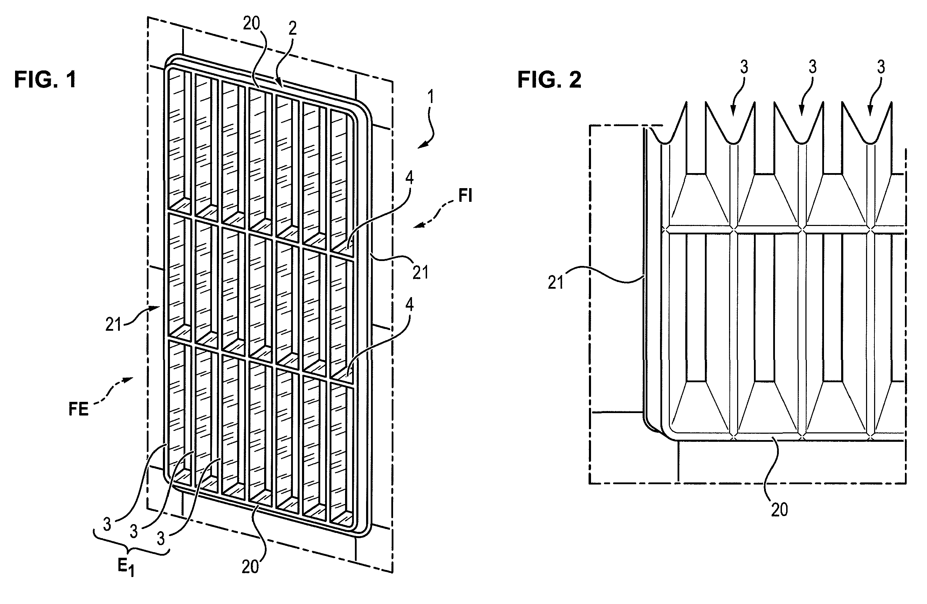

A la figure 1 annexée est visible dans son ensemble le dispositif séparateur d'embruns 1 conforme à la présente invention. Il est représenté en place contre une cloison appartenant, par exemple, à un navire équipé d'un système de chauffage/ventilation/climatisation, connu sous l'acronyme "HVAC".

Ce dispositif séparateur d'embruns a extérieurement l'allure d'une grille classique. Il comporte un cadre 2 présentant deux côtés parallèles supérieur et inférieur 20 et deux côtés longitudinaux parallèles 21. L'ensemble s'inscrit dans un parallélépipède rectangle, avec des angles non saillants.

Ce dispositif est avantageusement réalisé en matière plastique telle que du polypropylène ou en matériau composite tel que de la fibre de verre imprégnée de résine thermodurcissable.

Entre ses extrémités haute et basse, c'est-à-dire rejoignant les côtés supérieur et inférieur 20 s'étendent des profilés identiques 3 qui sont reliés au cadre 2 et qui délimitent une face extérieure FE et une face intérieure FI (cette dernière n'étant pas visible en tant que telle sur la figure 1).

Les termes "extérieur" et "intérieur" sont définis en relation avec le conduit de prise d'air du dispositif HVAC. Dans ces conditions, la face intérieure est située du côté de ce conduit, tandis que la face extérieure est disposée à l'extérieur de ce conduit.

Comme montré plus particulièrement à la figure 2, les profilés 3 de ce premier ensemble E1 sont tous identiques et séparés les uns des autres par un intervalle.

Seuls les profilés gauche et droite qui se raccordent aux côtés 21 du cadre ont une forme légèrement différente de celle de leurs voisins.

Pour une meilleure tenue mécanique de l'ensemble, le dispositif selon l'invention comporte également des profilés transversaux 4 qui sont solidaires de l'ensemble des profilés 3 de l'ensemble E₁.

Dans un mode de réalisation préférentiel, l'ensemble E₁ est un ensemble moulé d'un seul bloc.

Dans un autre mode de réalisation, l'assemblage des différents profilés entre eux et avec le cadre est réalisé par exemple par collage ou soudage.

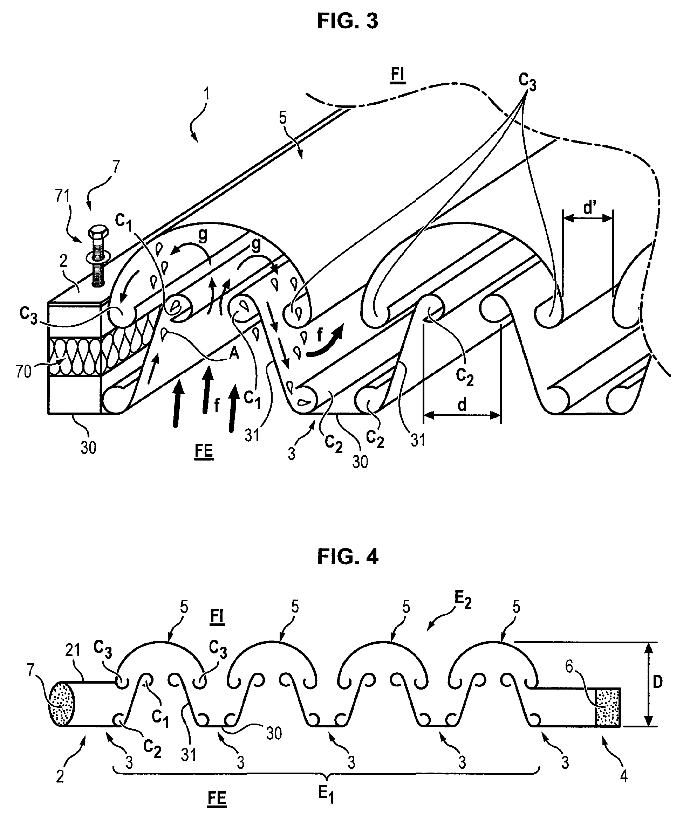

On se reportera maintenant aux figures 3 et 4 pour expliquer plus en détail la structure particulière d'un mode de réalisation possible du dispositif. Sur ces figures, le dispositif est présenté à plat, ceci afin de faciliter la lecture des schémas.

Plus particulièrement, à la figure 4, on reconnaît l'ensemble E₁ des profilés 3 précités. On note plus particulièrement que ces profilés ont une forme concave, de concavité orientée vers la face intérieure FI du dispositif.

Tels qu'ils sont visibles ici, on constate qu'ils présentent la forme d'une gouttière en U, avec un fond plan 30 et deux ailes 31 symétriques et divergentes.

Une telle forme, qui s'inscrit sensiblement dans un trapèze isocèle, est particulièrement pratique puisque le moule qui permet la fabrication de ces profilés peut être réutilisé, même si la longueur des ailes 31 doit être adaptée aux conditions d'utilisation. Dans ce cas, il suffit de couper le profilé fabriqué aux dimensions souhaitées.

Dans le mode de réalisation préférentiel présenté ici, les profilés 3 du premier ensemble E₁ présentent des canaux C₁ et C₂ de collecte d'eau, qui seront dénommés ci-après "pièges à eau".

Ces pièges à eau C₁ sont situés à l'extrémité libre des ailes 31 des profilés 3 et d'une pièce avec celles-ci. Plus précisément, ces pièges C₁ sont constitués par le recourbement de l'extrémité libre des ailes 31 vers l'extérieur, en formant une portion de spirale qui s'interrompt à proximité de l'aile 31 associée.

Les pièges à eau C₂ sont optionnels. Ils sont situés dans la zone de jonction du fond plan 30 avec les ailes 31. Ils sont de préférence d'une pièce avec chaque aile 31, le fond plan étant alors rapporté aux deux ailes 31.

Comme montré à la figure 3, les pièges à eau C₁ et C₂ présentent, en partie supérieur des profilés, une largeur d qui augmente au fur et à mesure que l'on se dirige du haut vers le bas du profilé, pour atteindre une largeur d'.

En d'autres termes, les pièges à eau C₁ et C₂ présentent avantageusement une section croissante au fur et à mesure que l'on se dirige vers le bas de chaque profilé.

On comprendra l'intérêt de cette caractéristique plus loin dans la description.

Dans des modes de réalisation non représentés, les profilés 3 du premier ensemble E₁ pourraient présenter une autre forme, par exemple à section en V ou à section en arc-de-cercle.

Sur les figures 3 et 4 précitées sont visibles aussi les profilés 5 qui constituent le deuxième ensemble E₂ qui est, lui, situé du côté de la face interne FI du dispositif.

Dans l'exemple représenté ici, les profilés 5, tous identiques, présentent une section en forme d'arc-de-cercle, de sorte que l'on peut les assimiler à des gouttières.

Comme pour les profilés 3, ces profilés 5 s'étendent de haut en bas à l'intérieur du dispositif 1 tout en étant écartés les uns des autres.

La concavité des profilés 5 de ce deuxième ensemble E₂ est dirigée vers la face externe FE du dispositif. De plus, on note que les profilés 3 et 5 des deux ensembles E₁ et E₂ sont disposés en quinconce de sorte que les deux bords longitudinaux de chaque profilé 5 du deuxième ensemble E₂ se situent respectivement en regard de deux profilés voisins 3 du premier ensemble E₁.

De manière similaire, les bords longitudinaux des profilés 5 sont recourbés vers l'intérieur pour constituer des pièges à eau C₃ en forme de portion de spirale.

Dans un mode de réalisation préférentiel, l'ensemble des profilés E₂ sont moulés d'un seul bloc avec le cadre. Alternativement, l'assemblage des différents profilés entre eux et avec le cadre est réalisé par exemple par collage ou soudage.

Sur la figure 4 apparaît, au niveau du cadre 2, des moyens 6 et 7, dont un exemple de réalisation est présenté à la figure 3. Il s'agit plus particulièrement de moyens de réglage de l'écartement entre les profilés des deux ensembles E₁ et E₂. A la figure 4, on a référencé D la distance qui sépare, dans la position illustrée ici, les fonds respectifs des profilés 3 et 5. Pour des raisons qui seront expliquées plus loin dans la description, on a tout intérêt à pouvoir faire varier, manuellement ou automatiquement la valeur de cet écartement.

Les moyens 6 et 7 permettent de remplir cette fonction. Ainsi, à la figure 3, on a représenté des moyens déformables élastiquement, référencés 70, qui s'étendent entre les deux ensembles E₁ et E₂ sur tout le pourtour du cadre 2. Il s'agit par exemple d'un matériau mousse déformable élastiquement 70.

Par ailleurs, le cadre est pourvu d'un moyen de fixation des deux ensembles à une cloison, qui consiste ici en un système boulon-écrou référencé 71.

La raison pour laquelle ces moyens sont repérés par deux références différentes 6 et 7 à la figure 4 résulte du fait que l'on peut intégrer aussi à ces moyens de réglage, d'un seul côté du cadre, un système d'ouverture du dispositif qui permettra notamment un nettoyage de l'ensemble des profilés.

Bien entendu, d'autres moyens de réglage peuvent être utilisés.

Ainsi, des dispositifs de commande manuelle du type jeu de ressorts ou accessoires élastiques peuvent être utilisés.

On peut par ailleurs jouer sur les caractéristiques géométriques ou mécaniques, telle que l'épaisseur ou encore le caractère souple et déformable des profilés du deuxième ensemble E₂ pour moduler sa rigidité et permettre une déformabilité de cet ensemble E₂ en fonction du débit d'air souhaité. Cette déformation de l'ensemble E₂ (tandis que l'ensemble E1 est rigide) crée ainsi une variation de la section de passage de l'air entre les profilés 3 de l'ensemble E₁ et les profilés 5 de l'ensemble E₂, pour obtenir une vitesse de passage de l'air qui optimise les performances du dispositif.

De plus, on peut envisager de mettre en oeuvre des moyens de réglage automatiques qui, pour des raisons expliquées plus loin, sont indexés sur la vitesse de l'air qui traverse le dispositif. Dans une variante non représentée, ces moyens de réglage peuvent être asservis à la pression de l'air à l'intérieur du dispositif.

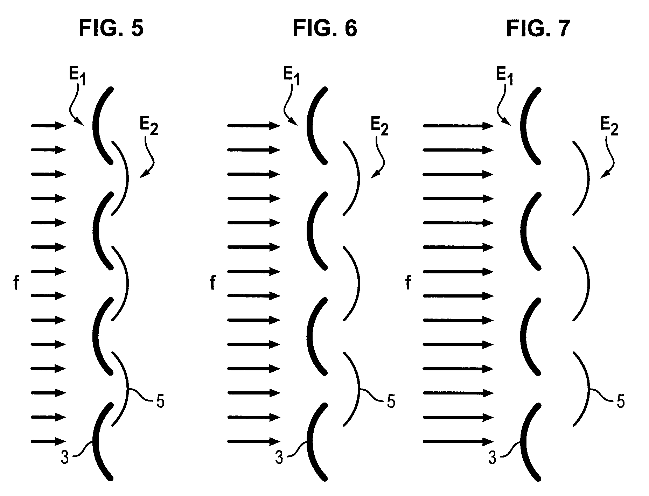

On se reportera maintenant à la figure 3 pour expliquer comment un flux d'air chargé d'embruns se comporte en traversant le dispositif selon l'invention. On précise qu'à la figure 7, les profilés ont été représentés schématiquement, sans leurs pièges à eau.

Cette description sera complétée ensuite en référence aux figures 5 à 7 dans lesquelles on a représenté les ensembles E₁ et E₂ avec des écartements variables.

A la figure 3, on a représenté par les flèches f le cheminement d'un flux d'air traversant le dispositif, cet air étant chargé de gouttelettes d'eau A.

Le flux d'air dans le sens la face extérieure FE vers la face intérieure FI. Ce faisant, le flux d'air qui passe entre deux profilés voisins 3 s'engouffre dans l'espace qui les sépare deux à deux et rencontre le fond du profilé 5 du deuxième ensemble qui leur fait face. Ce dernier fait office de déflecteur, de sorte que le flux d'air se sépare en deux et s'engouffre dans les passages qui séparent les côtés longitudinaux des profilés 5 de ceux des profilés 3.

Ainsi, la vitesse de l'air augmente à son passage à travers le dispositif, ceci pour augmenter la force d'inertie des gouttelettes d'eau A, et ainsi améliorer la séparation desdites gouttelettes de l'air au contact du dispositif.

Ainsi, les gouttelettes d'eau A, du fait de inertie et du phénomène de chicane généré par la structure particulière et la disposition spécifique des profilés 3 et 5 fait que l'eau est séparée de l"air et les gouttelettes A sont captées par les différents pièges à eau C₁, C₂, C₃ du dispositif.

Par simple gravité, les gouttelettes ainsi collectées coulent vers le bas de chacun des pièges à eaux C₁, C₂, C₃.

Du fait que leur section est croissante en direction du bas de ces pièges à eaux, la capacité d'emmagasinage d'eau est accrue, sans réel risque de saturation puis de débordement.

En se reportant cette fois-ci aux figures 5 à 7, plus le débit de l'air augmente, plus il est nécessaire d'augmenter la section de passage de l'air entre les profilés 3 et 5, pour optimiser la vitesse de l'air à travers le dispositif sur une plage de fonctionnement du dispositif définie pour laquelle la séparation des gouttelettes d'eau de l'air en circulation est optimale.

Cette fonction est assurée parfaitement en augmentant l'écartement entre les deux séries de profilés en utilisant les moyens précités.

Grâce à ce dispositif de l'invention, on obtient une parfaite séparation des gouttelettes d'eau de l'air en circulation, quel que soit le débit d'air souhaité.

Par rapport au dispositif antérieur, l'utilisation d'un matériau composite permet également un gain de poids et donc une facilité de manutention ainsi qu'un niveau sonore notablement réduit grâce à l'optimisation des formes des profilés, de leur écartement en fonction du débit d'air et des caractéristiques intrinsèques du matériau.

## Revendications

1. Dispositif séparateur d'embruns (1), qui comporte un cadre (2) et un premier et un second ensembles (E₁ ; E₂) de profilés longitudinaux et verticaux non jointifs (3 ; 5) de section droite concave, les extrémités haute et basse de ces profilés (3 ; 5) étant reliées audit cadre (2), ces profilés (3) délimitant une face externe (FE) et une face interne (FI), la concavité des profilés (3) du premier ensemble (E₁) étant dirigée vers ladite face interne (FI) tandis que celle des profilés (3 ; 5) du second ensemble (E₂) dirigée vers ladite face externe (FE), les profilés (3 ; 5) des deux ensembles (E₁ ; E₂) étant disposés en quinconce, de sorte que les deux bords longitudinaux (50) de chaque profilé (5) dudit deuxième ensemble (E₂) se situent respectivement en regard de deux profilés voisins (3) dudit premier ensemble (E₁), **caractérisé par le fait qu'**il comporte des moyens de réglage (6 ; 7) de l'écartement entre lesdits deux ensembles (E₁ ; E₂).

2. Dispositif selon la revendication 1, **caractérisé par le fait qu'**au moins les profilés (3 ; 5) d'un desdits ensembles (E₁ ; E₂) présentent une section droite en forme d'arc-de-cercle.

3. Dispositif selon la revendication 1, **caractérisé par le fait qu'**au moins les profilés (3 ; 5) d'un desdits ensembles (E₁ ; E₂) présentent une section droite en forme de "U" à fond plan (30) et ailes (31) symétriques et divergentes, ou en forme de "V".

4. Dispositif selon l'une des revendications précédentes, **caractérisé par le fait que** les profilés (3) d'un desdits ensembles, en l'occurrence ledit ensemble (E₁) situé du côté de la face externe (FE), présente au moins un canal (C) de collecte de gouttelettes d'eau (A), appelé piège à eau (C₁ ; C₂).

5. Dispositif selon la revendication 4, **caractérisé par le fait que** lesdits pièges à eau (C₁ ; C₂) sont délimités par le recourbement des extrémités opposées desdites ailes (31).

6. Dispositif selon la revendication 3 et 5 prises en combinaison, **caractérisé par le fait que** lesdits pièges à eau (C₁) sont délimités par le recourbement de leurs ailes (31) vers l'extérieur.

7. Dispositif selon la revendication 6, **caractérisé par le fait que** les profilés (3) du premier ensemble (E₁) comportent également des pièges à eau (C₂) dans la zone de jonction de leur base (30) à leurs ailes.

8. Dispositif selon la revendication 4, **caractérisé par le fait que** le second ensemble (E₂) est pourvu de pièges à eau (C₃), formé par leur recourbement de ses bords longitudinaux des profilés (5).

9. Dispositif selon l'une des revendications 5 à 8, **caractérisé par le fait que** la section desdits pièges à eau (C₁, C₂, C₃) augmente du haut en direction du bas desdits profilés (3 ; 5).

10. Dispositif selon l'une des revendications 1 à 9, **caractérisé par le fait que** lesdits moyens de réglage (6 ; 7) sont de type manuel.

11. Dispositif selon l'une des revendications précédentes, **caractérisé par le fait que** lesdits moyens de réglage (6 ; 7) sont automatisés et indexés sur la vitesse de l'air qui traverse le dispositif (1).

12. Dispositif selon l'une des revendications 1 à 10, **caractérisé par le fait que** lesdits moyens de réglage (6 ; 7) sont automatisés et sont asservis à la pression de l'air qui règne dans le dispositif (1).

13. Dispositif selon l'une des revendications précédentes, **caractérisé par le fait que** ledit premier ensemble (E₁) est rigide tandis que le second ensemble (E₂) est souple et déformable.
